# EUROPÄISCHE PATENTANMELDUNG

(11) **EP 0 923 852 A1**
(43) Veröffentlichungstag der Anmeldung: **23.06.1999**
(21) Anmeldenummer: 98124216.7
(22) Anmeldetag: 17.12.1998
(51) Int. Cl.: A01D 34/82

(54) **Reinigungsvorrichtung für Rasenmäher**

(30) Priorität: 17.12.1997 DE 19756004
(71) Anmelder: Schmid, Christian, 88367 Hohentengen (DE)
(72) Erfinder: Schmid, Christian, 88367 Hohentengen (DE)
(74) Vertreter: Petra, Elke, Dipl.-Ing.

(57) **Zusammenfassung**

Es wird eine Reinigungsvorrichtung für Rasenmäher, insbesondere für motorbetriebene Rasenmäher mit abnehmbarem Grasauffangkorb beschrieben, mit einem am Rasenmäherkörper außenseitig befestigten Vorrichtungskörper, der eine Durchtrittsbohrung besitzt, in der ein Wasserschlauch über ein Anschlußteil angebracht ist. Wesentlich ist, daß der Vorrichtungskörper eine Platte (1) ist, die nach Abnahme des Grasauffangkorbes an die Rasenmäherfläche in Anlage gebracht wird. Des weiteren ist die Durchgangsbohrung in der Platte (1) so angeordnet, daß sie in Arbeitsposition, im wesentlichen in der Messerebene oder nur geringfügig darüber, radial zum Messer (12) ausgerichtet ist, wobei in der Durchtrittsbohrung ein an sich bekanntes, zweiseitig anschlußfähiges Schlauch-Verbindungsstück (2) angeordnet ist.

## Beschreibung

Die Erfindung bezieht sich auf eine Reinigungsvorrichtung für Rasenmäher, insbesondere für Rasenmäher mit abnehmbarem Grasauffangkorb und vertikal verschwenkbarer Abschlußklappe gemäß Oberbegriff des Anspruchs 1, wie sie zur Reinigung des nach unten offenen, topfartigen Gehäuses, in dem sich ein um eine vertikale Achse rotierendes Messer befindet, mit Hilfe von Wasser gereinigt wird.

Solcherart Vorrichtungen sind in unterschiedlicher Bauweise bereits bekannt. Sie alle weisen als gleiche Grundelemente einen Körper mit mindestens einer, auf das rotierende Messer gerichteten Öffnung, durch die über einen Wasserschlauch Reinigungsflüssigkeit auf die Messer gespritzt wird.

So zeigt die DE 94 16 799.0 U1 eine Reinigungseinrichtung z.B. für Rasenmäher, die aus einem kreisförmigen Spritzrohr mit mehreren im wesentlichen axialen Austrittsöffnungen besteht, das über eine Schnellkupplung an einem Schlauch anschließbar ist und unter den Messertopf des Rasenmähers auf den Boden gelegt wird. Der Durchmesser des Spritzrohres muß jeweils geringer sein als der Innendurchmesser des Gehäuses, wodurch für unterschiedliche Rasenmähertypen und -größen auch unterschiedlich große Spritzrohrringe bereitzustellen sind, so daß im Verkauf mehrere Größen bereitzustellen sind und beim Einkauf jeweils die entsprechende Messertopfgröße bekannt sein muß.

Aus der US-PS 5,544,967 ist eine Reinigungsvorrichtung für einen Traktor-Rasenmäher bekannt, bei dem an der Oberwand des Messertopfes eine Durchgangsbohrung mit einem Verbindungsstück angeordnet ist, an dem außenseitig über eine Schnellkupplung ein Wasserschlauch anbringbar ist, während innenseitig ein Verteilerstück befestigt ist. Abgesehen davon, daß hier von oben in das Messergehäuse ein Loch gebohrt und ein Verbindungsstück angebracht ist, ist ein axial bis nahe an die Messer heranreichendes Verteilerstück vorgesehen, das Störungen in der Funktion des Rasenmähers verursachen kann. Zudem fließt das Wasser aus dem Verteilerstück im wesentlich axial nach unten, so daß die Gefahr besteht, daß das Wasser nicht ausreichend von den Messern mitgenommen wird.

Schließlich ist aus der US-PS 5,499,492 eine Reinigungsvorrichtung bekannt, die aus einem an der Vertikalwandung des topfartigen Rasenmähergehäuses von unten her anklemmbaren Körper besteht, der eine Wasserdurchtrittsöffnung aufweist, an der außenseitig ein Schlauchverbindungsstück befestigt ist. Innenseitig mündet die Wasserdurchtrittsöffnung als schräg nach oben führende Austrittsöffnung, durch die das Wasser unter Druck schräg nach oben auf die Messer geleitet wird. Da bei den meisten Rasenmähern jedoch der untere Rand des Messertopfes sehr nahe an den Boden heranreicht, besteht nicht die Möglichkeit, diese bekannte Einrichtung zu befestigen.

Aufgabe der Erfindung ist es, eine Reinigungsvorrichtung oben genannter Gattung anzugeben, die einfach aufgebaut und anbringbar ist, so daß eine leichte Nachrüstbarkeit bzw. Einsatzfähigkeit gegeben ist.

Diese Aufgabe wird durch eine Reinigungsvorrichtung mit den kennzeichnenden Merkmalen des Anspruchs 1 gelöst. Weitere besondere Ausgestaltungsformen sind in den Unteransprüchen beschrieben.

Demgemäß ist der Vorrichtungskörper eine Platte, die nach Abnahme des Grasauffangkorbes an die Rasenmäher-Rückfläche in Anlage gebracht wird. Die Durchtrittsbohrung der Platte ist so angeordnet, daß in Arbeitsposition das austretende Wasser im wesentlichen radial zum Messer ausgerichtet ist. Auch ist in der Durchtrittsbohrung ein an sich bekanntes, zweiseitig anschlußfähiges Schlauch-Verbindungsstück angeordnet. Hierdurch kann bedarfsweise die plattenförmige Reinigungsvorrichtung rasch an den Rasenmäher-Körper angebracht, der Wasserschlauch an diesen befestigt und die Reinigung des Gehäusetopfes vorgenommen werden. Durch die radiale Zuführung des Wassers kann dieses optimal durch die Messer und die sich mit den Messern drehende Luft, im Gehäusetopf an die Wände aufgebracht werden.

Die Platte kann erfindungsgemäß der eigene Schwenkdeckel des Rasenmähers sein. Dieser Schwenkdeckel ist um eine horizontale Achse vertikal, meist federbelastet, verschwenkbar und dient dazu, bei abgenommenem Grasauffangkorb die Auswurföffnung des Gehäusetopfes, insbesondere während die darin angeordneten, Messer rotieren, abzuschließen. Der Grasauffangkorb ist in der im wesentlichen mittig, unterhalb der Deckelanlenkung am Rasermäher-Körper angebrachten Einhängleiste über einen quer angeordneten Einhängebügel angehängt, wobei der Deckel auf dem Korb unter Federdruck aufliegt. In die Platte dieses Schwenkdeckels ist nun die Durchtrittsbohrung mit dem Verbindungsstück eingebracht. Soll der mit Verbindungsstück ausgerüstet Schwenkdeckel als Reinigungsvorrichtung benutzt werden, müssen lediglich die entsprechenden Verbindungen hergestellt werden bzw. mit dem Verbindungsstück der Wasserschlauch und ggf. ein Einspritz-Schlauchstück über Kupplungsstücke verbunden werden. Diese Ausführungsform ist vorzugsweise bereits bei Herstellung des Rasenmähers vorzusehen, kann jedoch auch durch einen geschickten Bastler nachträglich vorgesehen werden.

Eine optimal nachrüstbare Ausführungsform der erfindungsgemäßen Reinigungsvorrichtung wird erhalten, wenn die Platte abnehmbar am Rasenmäher angeordnet ist, wobei hierfür an der Plattenoberseite eine Einhängeeinrichtung vorgesehen ist, zum Einhängen an der Einhängeleiste für die Grasauffangkorb. Hiermit besteht die erfindungsgemäße Reinigungsvorrichtung aus einer relativ einfachen Platte, die bedarfsweise an dem Rasenmäher angebracht und in Benutzung genommen werden kann. Dabei wird der auf dem Grasauffangkorb aufliegende Schwenkdeckel angehoben, der Korb ausgehängt, statt dessen die Reinigungsvorrichtung eingehängt und über diese der Schwenkdeckel aufgelegt, der die Vorrichtungsplatte an die Rasenmäherkörper angedrückt festhält.

Selbstverständlich kann der Wasserschlauch auch über ein Schraub-Verbindungsstück o.ä. an der Platte befestigt werden. Vorteilhaft ist jedoch, wenn das Verbindungsstück für eine Schnellbefestigung über entsprechende, an sich bekannte Kupplungsstücke ausgelegt ist, so daß der Wasserschlauch auch erst nach Einhängen der Platte an dieser mühelos, nur durch einen Griff, angesteckt werden kann. Das Verbindungsstück kann jedoch auch innenseitig als Schnellverbindungsteil ausgebildet sein, so daß ein Stutzen oder Schlauchstück mit Hilfe eines entsprechenden Schnellkupplungsteils an der Platte befestigt werden kann. Diese Teile werden benötigt, um das Wasser, insbesondere bei Rasermähern mit langem Auswurftunnel des Rasen-mäherkörpers, ausreichend direkt und gezielt an die Messer heranzuführen. Bei kleineren Rasenmähern, mit nur sehr kurzer Auswurföffnung ist die Anbringung eines solchen Verlängerungsstutzens nicht unbedingt notwendig, so daß dort das Wasser direkt aus dem Verbindungsstück auf die Messer spritzen kann.

Erfindungsgemäß kann die Einhängevorrichtung in unterschiedlichster Weise ausgeführt sein. Sie muß lediglich ein rasches und gutes Einhängen der Platte sicherstellen.

So kann die Einhängeeinrichtung aus einem Einhängebügel bestehen, der ähnlich wie der Einhängebügel des Grasauffangkorbes ausgebildet und befestigt ist. Es ist somit ein langgestreckter, U-förmiger Bügel an der Oberseite der Platte, z.B. durch Anschweißen über die kurzen Bügelschenkel befestigt. Diese Bügelschenkel können jedoch auch länger ausgebildet sein und klemm-verschiebbar an der Platte befestigt sein, z.B. über Schellen, Steckböden mit Klemmschrauben usw.. Durch die Höhenverstellbarkeit des Bügels ist sichergestellt, daß die Durchtrittsbohrung in optimaler Ausrichtung zum Messer ausgerichtet ist.

Dieser Einhängebügel kann auch ein parallel zur Plattenoberkante eingebrachter Schlitz sein, dessen Länge selbstverständlich entsprechend der Länge der Einhängeleisten auszulegen ist. Auch ist zur raschen und reibungslosen Einhängung vorteilhaft, wenn zumindest die obere Längsseite des Schlitzes entsprechend abgerundet oder mit großen Kantenbrüchen versehen ist. Denkbar ist, mindestens zwei Einhängeschlitze knapp untereinander anzuordnen, um bedarfsweise eine gewisse Höheneinstellbarkeit für die Durchtrittsöffnung zu erreichen.

Von Vorteil ist auch, wenn die Einhängevorrichtung aus mindestens einem Haken besteht, der an der Platte so befestigt ist, daß die Haken-Bügelteile sich optimal in die Einhängeleiste einsetzen lassen. Zudem kann dieser mindestens eine Haken, zur optimalen Höheneinstellung der Wasserdurchtrittsbohrung, in an sich bekannter Weise höhenverstellbar an der Platte, z.B. über Schraubbefestigungen, angebracht sein.

So kann ein breiter Haken mittig an der Platte angeordnet sein, wobei die Hakenbreite im wesentlichen der Breite der schmalsten Einhängeleiste entsprechen kann.

Es können jedoch auch zwei schmale Haken, in gleicher Mittenbeabstandung voneinander an der Platte angeordnet sein, wobei diese beiden Haken so zu beabstanden sind, daß sie möglichst an der jeweiligen äußeren Zone der Einhängeleiste eingreifen.

Zum Höhen- und Abstandeinstellen der Haken, für die Fälle unterschiedlichen Längen bzw. Höhen-Einstellbedarfs für die Durchtrittsöffnung bzw. des Verbindungsstücks, sind in der Platte mehrere Lochreihen oder Langlöcher vorgesehen. So kann je nach dem ob die Haken innen- oder außenseitig an der Platte angebracht sind, eine direkte Anschraubung über in der Platte vorgesehene Gewindebohrungen und entsprechenden Durchtrittsbohrungen in den Haken oder Durchtrittsbohrungen in der Platte und Schrauben mit Muttern befestigt werden. In letzterem Fall können auch in Plattenhochrichtung ausgerichtete Langlöcher vorgesehen sein, die eine stufenlose Höhenverstellbarkeit erlauben. Selbstverständlich können die Haken auch in an sich bekannten, an der Platte vorgesehenen Klemmeinrichtungen höheneinstellbar festgehalten werden.

Schließlich wirkt sich sehr vorteilhaft aus, wenn an der Platte zusätzlich Einrichtungen zum Festhalten an dem Rasenmäher-körper vorgesehen sind. So ist denkbar, an sich bekannte, den Rasenmäherkörper an den Unterkanten umgreifende Schnapphebel vorzusehen. Die einfachste Lösung ist jedoch, innenseitig an der Platte mindestens einen Magneten anzuordnen, der die Platte am Körper festhält, um so, zusammen mit der Andruckkraft des Schwenkdeckels, der Rückstoßkraft des Wassers, die ein Abheben der Platte verursachen könnte, entgegenzuwirken. Dabei ist sinnvoll, daß die Magnete so an der Platteninnenseite angebracht sind, daß sie möglichst nahe an der Durchtrittsöffnung sich befinden, selbstverständlich so angeordnet, daß sie jeweils sicher auf der Rasenmäherwand zum Anliegen kommen und nicht etwa in den freiliegenden Tunnelteil.

Nachfolgend wird die Erfindung anhand mehrerer Ausführungsbeispiele unter bezug auf die Zeichnung näher erläutert.

Es zeigen:
- Fig. 1:: eine außenseitige Ansicht auf eine Zwei-Haken-Aus führungsform, mit nicht angeschlossenem Schlauch,
- Fig. 2:: einen Schnitt II-II gemäß Fig. 1, mit eingesetzten Schläuchen,
- Fig. 3:: eine Draufsicht auf eine Ausführungsform mit festem Einhängebügel, ohne Schläuche,
- Fig. 4:: einen Schnitt IV-IV aus Fig. 3,
- Fig. 5:: eine Draufsicht auf eine Ausführungsform mit Einhän geschlitzt, und
- Fig. 6:: einen Schnitt VI-VI aus Fig. 5.

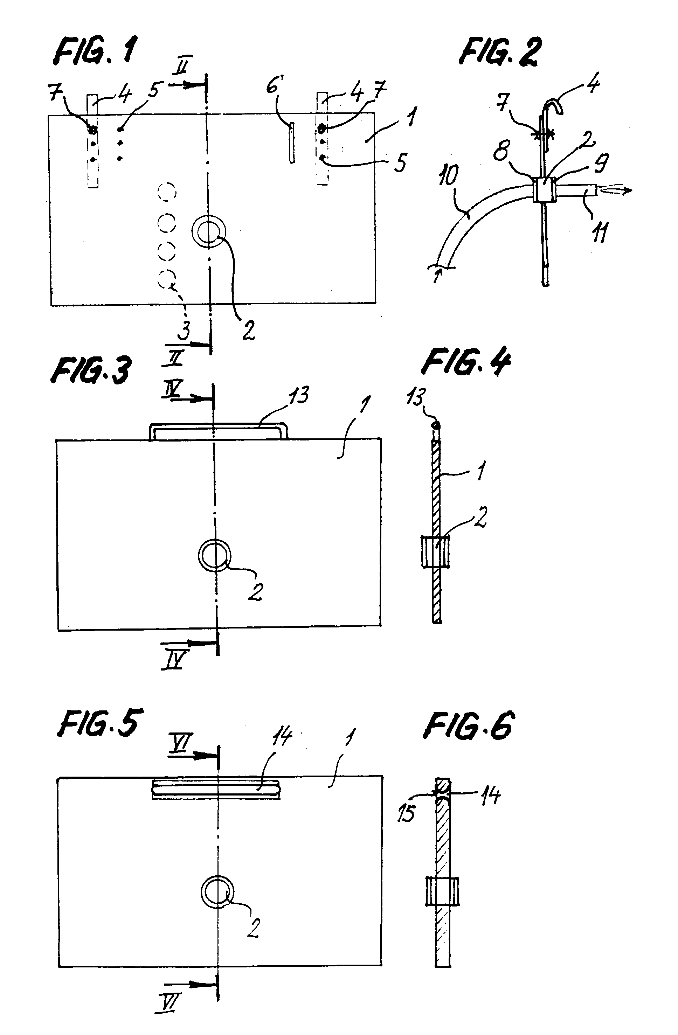

Aus Fig. 1, aber auch aus den weiteren Figuren ist zu entnehmen, daß die Einrichtung im wesentlichen aus einer Platte 1 besteht, in der in einer Durchgangsbohrung ein Verbindungsstück 2 angebracht ist. Innenseitig sind mehrere Magnete 3 durch Kleben o.ä. befestigt. Es kann jedoch auch nur ein unterer Magnet oder eine Magnetleiste vorgesehen sein.

Bei der Ausführungsform nach Fig. 1 sind zwei Haken 4 vorgesehen, die über eine Reihe von Löchern 5 oder über Langlöcher 6 oder über Schraubverbindungen 7 an der Platte 1 höhen- und abstandseinstellbar angebracht sind.

Aus Fig. 2 ist die Anordnung der Haken 4 an der Platte 1 gut ersichtlich, wobei hier die Befestigung innenliegend erfolgt. Diese kann jedoch auch außen anliegend vorgenommen werden, wofür dann bei der Auslegung des Hakenbügels die Dicke der Platte mit in Betracht zu ziehen ist, um ein sicheres Einhängen zu erlauben. Des weiteren ist hier erkennbar, wie am Verbindungsstück 2 außenseitig, über eine Schnellkupplung 8 ein Wasserschlauch 10 angeschlossen ist, während über ein Kupplungsstück 9 ein Stutzen oder Schlauchstück 11 befestigt ist, das bis nahe an das Messer 12 des Rasenmähers heranreicht.

Fig. 3 zeigt, daß an der Platte 1 oberseitig ein Einhängebügel angeordnet ist, der hier an der Plattenoberseite z.B. angeschweißt ist, wie auch aus Fig. 4 entnehmbar ist.

Aus Fig. 5 und 6 ist erkennbar, daß nahe der Plattenoberseite ein Einhängeschlitz 14 eingebracht ist, dessen Längsseiten Abrundungen 15 besitzen.

Muß ein Rasenmäher mit z.B. einer neu gekauften, erfindungsgemäßen Reinigungsvorrichtung nach erfolgtem Grasschnitt gereinigt werden, wird zuerst an dem Verbindungsstück in der Plattenmitte außenseitig der Wasserschlauch über seine Schnellkupplung eingesteckt und innenseitig, bedarfsweise, ebenfalls über Schnellkupplung, ein Einspritzstutzen oder -schlauch angesteckt. Danach wird am Rasenmäher der Schwenkdeckel angehoben und der Grasauffangkorb ausgehängt. Schließlich wird die Reinigungsvorrichtung mit daran befindlichen Schläuchen in die Einhängeleiste des Rasenmähers eingehängt und der Schwenkdeckel auf die Platte, die an der Rasenmäher-Rückwand anliegt, abgesenkt. Danach wird der Rasermäher angelassen bzw. seine Messer in Bewegung gesetzt, sodann das Wasser eingeschaltet, so daß das über den Schlauch und den Einspritzstutzen austretende Wasser auf das laufende Schneidwerkzeug trifft und durch dieses sowie durch die durch das Schneidwerkzeug in Bewegung gesetzte Luft an die Innenwände des Rasenmähers geschleudert wird. Dadurch werden die Wände des Gehäusetopfes von Gras und Schmutz befreit. Nach ca. ein bis zwei Minuten ist der Rasenmäher vollständig gereinigt und wieder einsatz- bzw. verstaubereit.

Selbstverständlich ist vor der ersten Inbetriebnahme der erfindungsgemäßen Reinigungsvorrichtung zu überprüfen, ob die Höhenanordnung und damit die Ausrichtung der Platten-Durchtrittsbohrung bzw. des Einspritz-Stutzens 11 die richtige Höheneinstellung in bezug auf die Schneidwerkzeuge aufweist.Es kann dann ggf. eine Korrektur der Einspritzhöhe über die Einhängeeinrichtung bzw. Haken oder Bügel bzw. Klemm- oder Schraubeinrichtungen vorgenommen werden.

### BEZUGSZEICHENLISTE

- 1.: Platte
- 2 .: Verbindungsstück
- 3 .: Magnete
- 4.: Haken
- 5.: Löcher
- 6.: Langloch
- 7.: Schraubverbindung
- 8.: Schnellkupplung
- 9.: Schnellkupplung
- 10.: Wasserschlauch
- 11.: Stutzen / Schlauchstück
- 12.: Messer
- 13.: Einhängebügel
- 14.: Einhängeschlitz
- 15.: Abrundung

## Patentansprüche

1. Reinigungsvorrichtung für Rasenmäher, insbesondere für motorbetriebene Rasenmäher mit abnehmbarem, rückwärtigem Grasauffangkorb und Vertikal-Schwenkdeckel,
mit einem am Rasenmäherkörper außenseitig befestigten Vorrichtungskörper, der eine Durchgangsbohrung besitzt, in der ein Wasserschlauch über ein Anschlußteil angebracht ist,
**dadurch gekennzeichnet**,
daß der Vorrichtungskörper eine Platte (1) ist, die nach Abnahme des Grasauffangkorbes an die Rasenmäher-Rückfläche in Anlage gebracht wird,
daß die Durchtrittsbohrung in der Platte so angeordnert ist,
daß sie in Arbeitsposition, im wesentlichen in der Messerebene oder nur geringfügig darüber, radial zum Messer (12) ausgerichtet ist,
und daß in der Durchtrittsbohrung ein an sich bekanntes, zweiseitig anschlußfähiges Schlauch-Verbindungsstück (2) angeordnet ist.

2. Vorrichtung nach Anspruch 1,
dadurch gekennzeichnet, daß die Platte (1) der (nichtabnehmbare, federbelastete) Schwenkdeckel des Rasenmähers ist.

3. Vorrichtung nach Anspruch 1,
dadurch gekennzeichnet, daß daß die Platte (1) abnehmbar angeordnet ist und hierfür an ihrer oberen Seite eine Einhängeeinrichtung (4, 13, 14) aufweist, zum Einhängen an der Einhängeleiste für den Auffangkorb des Rasenmähers.

4. Vorrichtung nach Anspruch 1,
dadurch gekennzeichnet, daß außenseitig an dem Verbindungsstück (2) über eine an sich bekannte Schnellkupplung (8) der Wasserschlauch (10) befestigbar ist, während innenseitig ein am Verbindungsstück (2) befestigbarer Stutzen oder Schlauchstück (11) radial auf das Messer (12) ausgerichtet anbringbar ist.

5. Vorrichtung nach Anspruch 1,
dadurch gekennnzeichnet, daß die Einhängeeinrichtung aus einem Einhängebügel (13) besteht, der ähnlich wie der Einhängebügel des Grasauffangkorbes ausgebildet und befestigt ist.

6. Vorrichtung nach Anspruch 1,
dadurch gekennzeichnet, daß der Einhängebügel ein parallel zur Plattenoberkante eingebrachter Einhängeschlitz (14) ist, dessen Länge derjenigen der Einhängeleiste entspricht und bei der zumindest die obere Längsseite große Kantenbrüche oder Abrundungen (15) aufweist.

7. Vorrichtung nach Anspruch 1,
dadurch gekennzeichnet, daß die Einhängeeinrichtung aus min. einem Haken (4) besteht, der an der Platte (1) so befestigt ist, daß der Hakenbügel in Wasserautrittsrichtung weist, wobei der Haken (4) direkt an der Plattenoberseite angeformt oder ein separates Bauteil ist.

8. Vorrichtung nach Anspruch 7,
dadurch gekennzeichnet, daß ein breiter Haken (4) mittig angeordnet ist, wobei die Hakenbreite im wesentlichen der Breite der Einhängeleiste entspricht.

9. Vorrichtung nach Anspruch 7,
dadurch gekennzeichnet, daß zwei schmale Haken (4) in einstellbarem Abstand zueinander angeordnet sind.

10. Vorrichtung nach Anspruch 7, daß zum Höhen- und Abstandeinstellen der Haken (4) mehrere Lochreihen (5) oder Langlöcher (6) vorgesehen sind, die parallel zueinander und zur Mittelachse der Platte (1) und je zwei symmetrisch zu letzterer beabstandet sind und daß die Haken (4) min. eine Bohrung aufweisen, für eine Schraubverbindung (7) mit der Platte (1).

11. Vorrichtung nach Anspruch 1,
dadurch gekennzeichnet, daß rasenmäherseitig an der Platte (1) mindestens ein Magnet (3) zum Zusammenwirken mit der motorseitigen Gehäusewand des Rasenmähers vorgesehen sind.
